# EUROPÄISCHE PATENTSCHRIFT

(11) **EP 2 185 988 B1**
(45) Veröffentlichungstag und Bekanntmachung des Hinweises auf die Patenterteilung: **30.03.2011**
(21) Anmeldenummer: 08787040.8
(22) Anmeldetag: 08.08.2008
(51) Int. Cl.: G05D 16/20

(54) **DRUCKBEGRENZUNGSVENTIL UND ANORDNUNG EINES DRUCKBEGRENZUNGSVENTILS ZUR VORSTEUERUNG EINES DRUCKREGELVENTILS**
PRESSURE LIMITING VALVE AND ARRANGEMENT OF A PRESSURE LIMITING VALVE FOR THE PILOT CONTROL OF A PRESSURE CONTROL VALVE
LIMITEUR DE PRESSION ET ARRANGEMENT D'UN LIMITEUR DE PRESSION POUR PILOTER UN RÉGULATEUR DE PRESSION

(30) Priorität: 05.09.2007 DE 102007042207
(43) Veröffentlichungstag der Anmeldung: 19.05.2010
(73) Patentinhaber: ZF Friedrichshafen AG, 88038 Friedrichshafen (DE)
(72) Erfinder: GIERER, Georg, 88079 Kressbronn (DE); MAYR, Karlheinz, 6900 Bregenz (AT); BÖHM, Ralph, 78351 Bodman-Ludwigshafen (DE); MOOSMANN, Markus, 88287 Gruenkraut (DE); MESCHENMOSER, Stefan, 88046 Friedrichshafen (DE)
(86) Internationale Anmeldenummer: PCT/EP2008/060445
(87) Internationale Veröffentlichungsnummer: WO 2009/030581

(56) Entgegenhaltungen:
- DE-A1- 4 109 789
- DE-A1- 10 342 892
- DE-A1- 19 918 501
- US-A- 2 635 722
- US-A- 6 009 968

## Beschreibung

Die vorliegende Erfindung bezieht sich auf die Anordnung eines Druckbegrenzungsventils zur Vorsteuerung des Druckregelventils eines hydraulisch betätigbaren Schaltelementes eines Getriebes eines Kraftfahrzeugs gemäß dem Oberbegriff des Patentanspruchs 1. Des weiteren bezieht sich die Erfindung auf die Ausgestaltung eines Druckbegrenzungsventils.

Aus dem Stand der Technik ist bekannt, in Automatgetrieben von Kraftfahrzeugen in der Regel nasslaufende Lamellenschaltelemente zur Momentenübertragung zu verwenden.

Hierbei erfolgt die Momentenübertragung reibschlüssig über die Verpressung der Lamellenpakete der Schaltelemente, wobei die dazu erforderliche Anpresskraft auf das Lamellenpaket über einen hydraulisch betätigten Kupplungskolben erzeugt wird, der über ein Druckregelventil (Kupplungsventil) aktuiert wird. Die Druckregelventile der Schaltelemente werden entweder direkt betätigt oder über vorgeschaltete Druckbegrenzungsventile angesteuert.

In beiden Fällen wird eine ansteuerstromproportionale Magnetkraft erzeugt, durch die die rein hydraulische Druckregelventile der Schaltelemente verstellt werden. Der Arbeitsdruck der Kupplungsventile ergibt sich durch die Gleichgewichtsbedingung von ansteuerstromproportionaler Kraft (= Aktuierungskraft) und der Rückführkraft (= Reaktionskraft) des Druckregelventils.

Für den Fall der Ansteuerung der Druckregelventile über einen vorgeschalteten Druckregler bzw. über ein vorgeschaltetes Druckbegrenzungsventil (Druckvorsteuerventil) wird nach dem Stand der Technik zur Ansteuerung häufig ein so genannter Closed-End Druckregler (CE-DR) verwendet, welcher zwei in hydraulischer Halbbrückenschaltung angeordnete Ventilsitze aufweist, wobei auf der Zulaufseite in der Regel eine Kugelsitzgeometrie und auf der Tankseite eine Flach- oder Kegelsitzgeometrie zum Einsatz kommt.

In vorteilhafter Weise ermöglicht ein Closed-End Druckregler in den Endstellungen eine Minimierung des Leckölflusses; bei gewünschtem Minimaldruck wird die Zulaufsteuerkante verschlossen und somit der Leckageölfluss von der Zulaufsteuerkante zur Tankkante auf nahezu 0 ml/min reduziert. Dies ist notwendig, da idealerweise jedem Schaltelement eines Automatgetriebes ein Aktuator direkt zugeordnet werden soll, um jeden möglichen Schaltungsübergang darstellen zu können.

Ohne CE-Funktion würde jedes Druckvorsteuerventil, bei minimaler Druckanforderung eine maximale Leckage zwischen der Zulaufkante und der Tankkante aufweisen. Bei einer hohen Anzahl von anzusteuernden Schaltelementen ergäbe sich somit ein sehr hoher Ölvolumenbedarf im Hydrauliksystem der Hydraulikpumpe.

Ein derartiges Druckvorsteuerventil ist beispielsweise aus der DE 10342892 A1 der Anmelderin bekannt. Im Rahmen der DE 10342892 A1 ist ein Proportional-Druckbegrenzungsventil mit einem Magnetteil und mit einem Ventilteil beschrieben, wobei das Ventilteil mit einer Zulauföffnung für den Zulaufvolumenstrom, einer ersten Ablauföffnung für den Füllvolumenstrom und einer zweiten Ablauföffnung für den Tankvolumenstrom versehen ist und einen Kugelsitz, einen mit einer Öffnung versehenen Flachsitz, ein Schließteil zur Steuerung der Durchlaufmenge durch die Öffnung des Flachsitzes und einen Strahlumlenker aufweist, der zwischen dem Kugelsitz und dem Flachsitz angeordnet ist.

Bei dem bekannten Ventil ist die Zulauföffnung für den Zulaufvolumenstrom an dem dem Magnetteil abgewandten stirnseitigen Ende des Ventilteils koaxial zu dessen Längsachse ausgebildet; die Ablauföffnungen für den Füllvolumenstrom sind an der Seitenwand des Ventilteils radial zu dessen Längsachse ausgebildet, sodass von der Zulauföffnung zur Ablauföffnung strömende Fluidteilchen einer Ablenkung von maximal 90° ausgesetzt sind.

Aus dem Stand der Technik ist zudem bekannt, den Closed-End Druckregler derart anzuordnen, dass die Ankerachse achsparallel zur Kurbelwelle des Motors ist, damit die Kurbelwellenschwingungen, die überwiegend durch Drehungleichförmigkeiten des Verbrennungsmotors hervorgerufen werden, möglichst nicht auf die Ankerachse und das Druckreglerschließelement des Druckbegrenzungsventils übertragen werden. Auf diese Weise kann effektiv verhindert werden, dass sich die Schwingungsanregung der Verbrennungsmotoreinheit auf die elektrohydraulische Druckregelung des Hydrauliksystems überträgt.

Wenn solche Druckbegrenzungsventile derart angeordnet sind, dass die Druckreglerachse in Fahrtrichtung zeigt, entsteht der Nachteil, dass bei einer Beschleunigung, insbesondere bei einer Anfahrbeschleunigung oder beim Abbremsen des Fahrzeugs sich die im Druckbegrenzungsventil durch die Beschleunigung eingekoppelte Kraft auf die Druckreglerachse in der Regelstrecke aufschaukeln und zu erheblichen Komforteinbußen führen kann.

Der vorliegenden Erfindung liegt die Aufgabe zugrunde, ausgehend von dem genannten Stand der Technik eine Anordnung eines Druckbegrenzungsventils zur Vorsteuerung des Druckregelventils eines hydraulisch betätigbaren Schaltelementes eines Getriebes eines Kraftfahrzeugs anzugeben, welche in einer Eliminierung des Nachteils der Folgen der sich aufschaukelnden beschleunigungsbedingten Schwingungen resultiert.

Des weiteren soll eine Ausgestaltung eines Druckbegrenzungsventils angegeben werden, durch die zur Realisierung der erfindungsgemäßen Anordnung keine Veränderung bzw. Modifikation der Geometrie der hydraulischen Getriebesteuerung des Fahrzeugs erforderlich ist.

Diese Aufgabe wird für eine Anordnung eines Druckbegrenzungsventils durch die Merkmale des Patentanspruchs 1 gelöst. Weitere erfindungsgemäße Ausgestaltungen und Vorteile gehen aus den entsprechenden Unteransprüchen hervor.

Demnach wird vorgeschlagen, das Druckbegrenzungsventil derart anzuordnen, dass dessen Ankerachse senkrecht zur Fahrtrichtung bzw. zur Längsrichtung des Fahrzeugs angeordnet ist, wodurch das Problem der sich aufschaukelnden Anfahrschwingungen eliminiert wird. Vorzugsweise ist hierbei die Ankerachse des Druckbegrenzungsventils parallel zur Fahrbahnebene angeordnet.

Um eine nach dem Stand der Technik ausgeführte vorhandene Geometrie der hydraulischen Getriebesteuerung beibehalten zu können, wird vorgeschlagen, das erfindungsgemäß im Vergleich zum Stand der Technik um 90° verdreht angeordnete Druckbegrenzungsventil derart zu modifizieren, dass die vorhandenen Anschlüsse für den Zulaufvolumenstrom und den Füllvolumenstrom verwendet werden können.

Zu diesem Zweck sind die Zulauföffnung für den Zulaufvolumenstrom und die Ablauföffnung für den Füllvolumenstrom radial zu der Ankerachse des Ventils ausgeführt (im Gegensatz zu dem aus der DE 10342892 A1 bekannten Ventil, bei dem die Zulauföffnung für den Zulaufvolumenstrom parallel zur Ankerachse ist). Gemäß einer vorteilhaften Weiterbildung der Erfindung ist die Ventilnase senkrecht zur Ankerachse des Ventils angeordnet.

Die Erfindung wird im folgenden anhand der beigefügten Figur, welche eine schematische Darstellung der erfindungsgemäßen Anordnung eines Druckbegrenzungsventils zur Vorsteuerung des Druckregelventils eines hydraulisch betätigbaren Schaltelementes ist, beispielhaft näher erläutert.

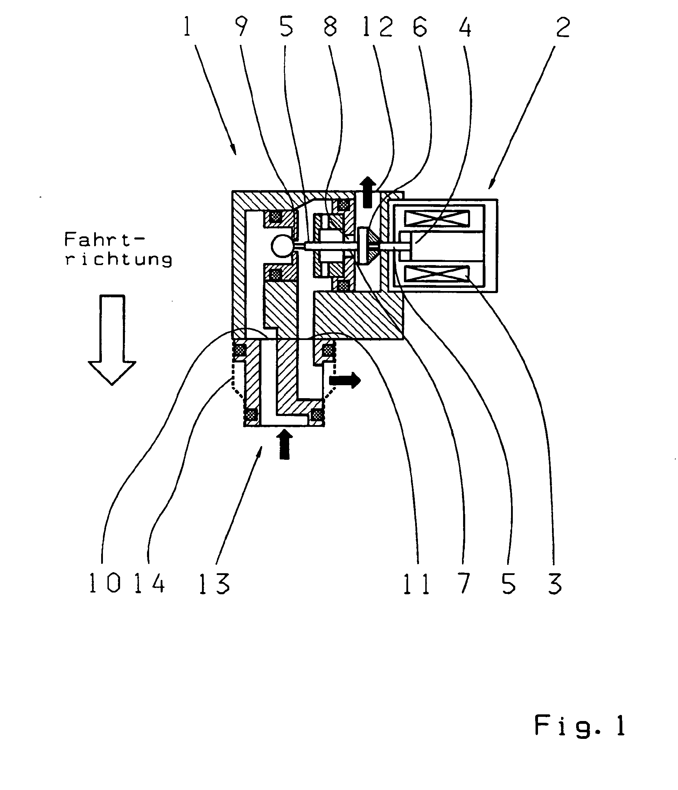

In Figur 1 ist ein Druckbegrenzungsventil 1 dargestellt. Derartige Proportional-Druckregelventile sind dem Fachmann gut bekannt, sodass im Folgenden nur die für das Verständnis der Erfindung notwendigen Teile beschrieben werden.

Das als Druckvorsteuerventil dienende Druckbegrenzungsventil 1 weist ein Magnetteil bzw. einen Elektromagneten 2 auf, das in herkömmlicher Weise einen Magnetkern, eine Magnetspule 3 und einen verschiebbaren Magnetanker 4 aufweist, sowie ein vom Magnetanker 4 verschiebbares Betätigungsteil 5 für ein Schließteil 6, das auf einem Flachsitz 7 zum Anschlag kommen kann und dabei eine im Flachsitz 7 eingearbeitete durchgehende Öffnung 8 verschließen kann.

Des weiteren ist mit 9 ist ein Kugelsitz bezeichnet; die Zulauföffnung für den Zulaufvolumenstrom ist mit 10, die Ablauföffnung für den Füllvolumenstrom zur Kupplung mit 11 und die Ablauföffnung für den Tankvolumenstrom mit 12 bezeichnet.

Die Fahrtrichtung bzw. die Längsachse des Fahrzeugs ist in Figur 1 durch den Pfeil veranschaulicht. Wie Figur 1 zu entnehmen ist, ist das Druckbegrenzungsventil 1 derart angeordnet, dass dessen Ankerachse senkrecht zur Fahrtrichtung bzw. zur Längsachse des Fahrzeugs angeordnet ist, wodurch der Einfluss beschleunigungsbedingter Schwingungen auf die Druckregelung eliminiert wird.

Um eine nach dem Stand der Technik ausgeführte vorhandene Geometrie der hydraulischen Getriebesteuerung beibehalten zu können, wird vorgeschlagen, das erfindungsgemäß im Vergleich zu den aus dem Stand der Technik bekannten Anordnungen um 90° verdreht angeordnete Druckbegrenzungsventil 1 derart zu modifizieren, dass die vorhandenen Anschlüsse der hydraulischen Getriebesteuerung für den Zulaufvolumenstrom und den Füllvolumenstrom verwendet werden können.

Wie in Figur 1 gezeigt, kann zu diesem Zweck auch die Zulauföffnung 10 des Ventils 1 radial zur Ankerachse ausgebildet sein, im Gegensatz zu dem aus der DE 10342892 A1 bekannten Ventil. Des weiteren ist die Ventilnase 13 des Ventils 1 senkrecht zur Ankerachse angeordnet. In der Figur ist mit 14 die dem Ventil 1 zugeordnete Aufnahme der Getriebesteuerung bezeichnet, welche durch die gestrichelte Linie angedeutet ist.

Obwohl die erfindungsgemäße Anordnung am Beispiel eines Druckvorsteuerventils mit CE-Funktion erläutert worden ist, können auch Ventile ohne CE-Funktion gemäß der Erfindung angeordnet und ausgebildet werden, mit dem aus dem Stand der Technik bekannten Nachteil des hohen Ölvolumenbedarfs im Hydrauliksystem.

### Bezugszeichen

- 1: Druckbegrenzungsventil
- 2: Magnetteil
- 3: Magnetspule
- 4: Magnetanker
- 5: Betätigungsteil
- 6: Schließteil
- 7: Flachsitz
- 8: Öffnung
- 9: Kugelsitz
- 10: Zulauföffnung
- 11: Ablauföffnung für den Füllvolumenstrom
- 12: Ablauföffnung für den Tankvolumenstrom
- 13: Ventilnase
- 14: Aufnahme der Getriebesteuerung

## Patentansprüche

1. Anordnung eines Druckbegrenzungsventils (1) zur Vorsteuerung eines Druckregelventils eines hydraulisch betätigbaren Schaltelementes eines Getriebes eines Kraftfahrzeugs, das über einen Verbrennungsmotor mit einer in Fahrtrichtung des Kraftfahrzeugs weisenden Kurbelwelle verfügt, wobei eine Ablauföffnung (11) des Druckbegrenzungsventils (1) radial zu einer Ankerachse des Druckbegrenzungsventils (1) ausgeführt ist, **dadurch gekennzeichnet, dass**
- das Druckbegrenzungsventil (1) derart angeordnet ist, dass dessen Ankerachse senkrecht zu der Fahrtrichtung angeordnet ist, wobei
- eine Zulauföffnung (10) des Druckbegrenzungsventils (1) radial zu der Ankerachse ausgeführt ist und
- eine Ventilnase (13) des Druckbegrenzungsventils (1) senkrecht zu der Ankerachse angeordnet ist.

2. Anordnung eines Druckbegrenzungsventils (1) nach Anspruch 1, **dadurch gekennzeichnet, dass** die Ankerachse des Druckbegrenzungsventils parallel zur Fahrbahnebene angeordnet ist.

3. Anordnung eines Druckbegrenzungsventils (1) nach Anspruch 1 oder 2, **dadurch gekennzeichnet, dass** die Geometrie der hydraulischen Getriebesteuerung nicht verändert wird.

## Claims

1. Arrangement of a pressure limiting valve (1) for the pilot control of a pressure regulating valve of a hydraulically actuable shift element of a transmission of a motor vehicle which has an internal combustion engine with a crankshaft pointing in the direction of travel of the motor vehicle, with an outflow opening (11) of the pressure limiting valve (1) being formed radially with respect to an armature axis of the pressure limiting valve (1), **characterized in that**
- the pressure limiting valve (1) is arranged such that its armature axis is arranged perpendicular to the direction of travel,
- with an inflow opening (10) of the pressure limiting valve (1) being formed radially with respect to the armature axis, and
- with a valve lobe (13) of the pressure limiting valve (1) being arranged perpendicular to the armature axis.

2. Arrangement of a pressure limiting valve (1) according to Claim 1, **characterized in that** the armature axis of the pressure limiting valve is arranged parallel to the roadway plane.

3. Arrangement of a pressure limiting valve (1) according to Claim 1 or 2, **characterized in that** the geometry of the hydraulic transmission controller is not changed.

## Revendications

1. Agencement d'une soupape de limitation de pression (1) pour piloter une soupape de régulation de la pression d'un élément de commutation à commande hydraulique d'une transmission d'un véhicule automobile, qui dispose d'un moteur à combustion interne avec un vilebrequin tourné dans la direction de conduite du véhicule automobile, une ouverture de sortie (11) de la soupape de limitation de la pression (1) étant réalisée radialement par rapport à un axe d'armature de la soupape de limitation de la pression (1), **caractérisé en ce que**
- la soupape de limitation de la pression (1) est disposée de telle sorte que son axe d'armature soit disposé perpendiculairement à la direction de conduite,
- une ouverture d'amenée (10) de la soupape de limitation de la pression (1) étant réalisée radialement par rapport à l'axe d'armature et
- un nez de soupape (13) de la soupape de limitation de la pression (1) étant disposé perpendiculairement à l'axe d'armature.

2. Agencement d'une soupape de limitation de pression (1) selon la revendication 1, **caractérisé en ce que** l'axe d'armature de la soupape de limitation de la pression est disposé parallèlement au plan de la chaussée.

3. Agencement d'une soupape de limitation de la pression (1) selon la revendication 1 ou 2, **caractérisé en ce que** la géométrie de la commande de transmission hydraulique n'est pas modifiée.
